Europäisches Patentamt

European Patent Office

Office européen des brevets

(11) Publication number: **0 251 601 B1**

# EUROPEAN PATENT SPECIFICATION

(45) Date of publication of patent specification: **06.10.93** (51) Int. Cl.5: **G11B 7/08**, G11B 21/08

(21) Application number: **87305483.7**

(22) Date of filing: **19.06.87**

(54) **Optical data recording/reproducing apparatus.**

(30) Priority: **19.06.86 JP 145897/86**

(43) Date of publication of application:
**07.01.88 Bulletin 88/01**

(45) Publication of the grant of the patent:
**06.10.93 Bulletin 93/40**

(84) Designated Contracting States:
**DE FR GB IT**

(56) References cited:
EP-A- 0 090 379
EP-A- 0 149 888
EP-A- 0 164 642
US-A- 4 788 421

PATENT ABSTRACTS OF JAPAN vol. 9, no.
20 (P-330) 1743 26 January 1985, & JP-A-59
165278

PATENT ABSTRACTS OF JAPAN vol. 8, no.
278 (P-322) 1715 19 December 1984, & JP-
A-59 144051

PATENT ABSTRACTS OF JAPAN vol. 9, no.
304 (P-409) 2027 30 November 1985, & JP-
A-60 136972

(73) Proprietor: **SHARP KABUSHIKI KAISHA**
**22-22 Nagaike-cho**
**Abeno-ku**
**Osaka 545(JP)**

(72) Inventor: **Nomura, Masaru**
**Abebono-ryo**
**2613-1 Ichinomoto-cho**
**Tenru-shi Nara-ken(JP)**
Inventor: **Deguchi, Toshihisa Daiyahaitsu**
**Gakuenmae C-722**
**2-200-5**
**Gakuendaiwa-cho**
**Nara-shi Nara-ken(JP)**

(74) Representative: **Brown, Kenneth Richard et al**
**R.G.C. Jenkins & Co.**
**26 Caxton Street**
**London SW1H 0RJ (GB)**

## Description

This invention relates to an optical data recording/reproducing apparatus, and more particularly to a position control system for an optical tracking data recording/reproducing apparatus.

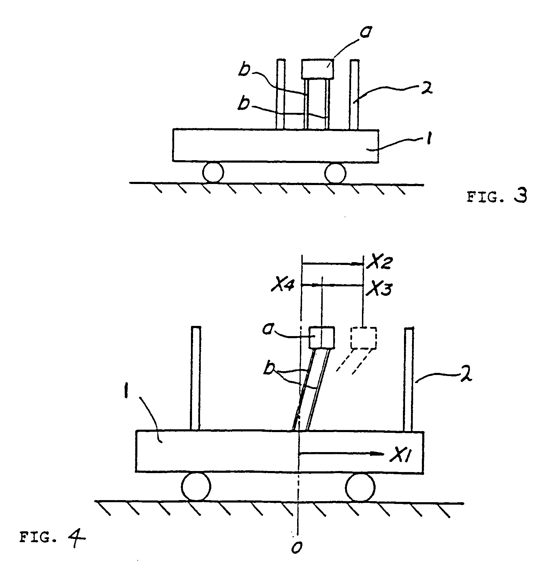

An optical data recording/reproducing apparatus adapted to record and reproduce data by the use of a light beam is required to direct the light beam spot to a required position on a recording medium with high precision. This high precision in position is especially important in the tracking direction. In order to provide the required accuracy of positioning, dual or tandem servo control systems have been widely used. Such systems, as shown in Fig. 3, employ a first actuator 1 for rough control in the tracking direction and a second actuator 2 for precise control in the tracking direction. Hereafter, the first and second actuators 1 and 2 are referred to as "a roughing actuator" and "a precision actuator", respectively.

Generally, the roughing actuator 1 employs a linear motor which also serves as an access mechanism.

In most cases, however, the precision actuator 2 employs a resilient material like rubber or parallel metal springs for the support members $\underline{b}$ of an objective lens $\underline{a}$ which converges the light beam.

However, $\underline{a}$ tandem servo control of this sort suffers from the problem that the precision actuator 2 is physically influenced by the behaviour of the roughing actuator 1, making it difficult to provide stabilized control unless appropriate countermeasures are employed.

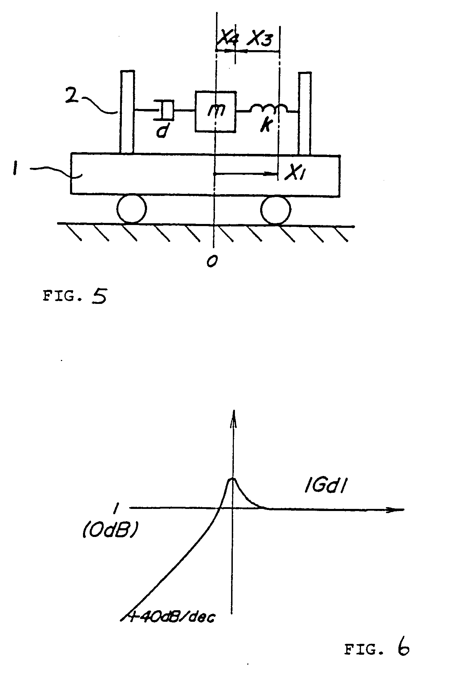

The above-mentioned problem is explained more particularly with reference to Figs. 4 and 5, in which like parts are designated by like reference numerals.

Referring to Fig. 4, there is shown a case where the roughing actuator 1 is displaced in the direction x1 by servo action, while driving the precision actuator 2 of the tandem servo system in the direction x2 similarly by servo action. In such a case, due to the displacement x3 caused by physical interference as a result of, or reaction to, the displacement of the roughing actuator 1 in the direction x1, the precision actuator 2 fails to make the expected displacement x2, making only the displacement x4. This is short of the expected displacement by a distance corresponding to the interferential displacement x3. Of course, the displacement of the precision actuator 2 causes a reaction on a part of the roughing actuator 1. However, this reaction can be ignored because the mass of the moving part of the precision actuator is far smaller than that of the roughing actuator 1.

Referring now to Fig. 5 which shows a model of the servo control of Fig. 4, we consider the physical interference imposed on the precision actuator 2 as a result of a displacement of the roughing actuator 1, without giving consideration to the driving force of the precision actuator 2. Since the physical interference between the two actuators 1 and 2 corresponds to the difference x3 of the displacement x4 of the precision actuator 2 from the displacement x1 of the roughing actuator 1, we should take note of the ratios between them in consideration of the directions of displacements as follows.

$$Gd = x3/x1 = (x4 - x1)/x1 \qquad (1)$$

As the precision actuator 2 is generally a spring system with resonance characteristics, the displacements x1 and x4 of the rough and precision actuators 1 and 2 are expressed by the following equation of motion (2).

$$m(d^2x4/dt^2) + d\{(dx4/dt) - (dx1/dt)\} + k(x4-x1) = 0 \qquad (2)$$

By a Laplace transformation of Equation (2), we obtain

$$ms^2x4 + ds(x4 - x1) + k(x4 - x1) = 0$$
$$(ms^2 + ds + k)x4 = (ds + k)x1$$

Therefore,

$$Gd = (x4 - x1)/x1 = (x4/x1) -1$$
$$= \{(ds^2 + k) / (ms + ds + k)\} - 1$$
$$= -ms^2/(ms^2 + ds + k)$$
$$= -s^2/(s^2 + 2\zeta\omega os + \omega o^2) \qquad (3)$$

In the foregoing equations:

m is the mass of the movable parts and objective lens of the precision actuator 2;

d is the attenuation constant of the precision actuator 2;

k is the spring constant of the precision actuator 2;

$\zeta = d/\{2(mk)^{0.5}\}$ is the damping number of the precision actuator 2; and

$\omega o = (k/m)^{0.5}$ is the resonant angular frequency of the precision actuator 2.

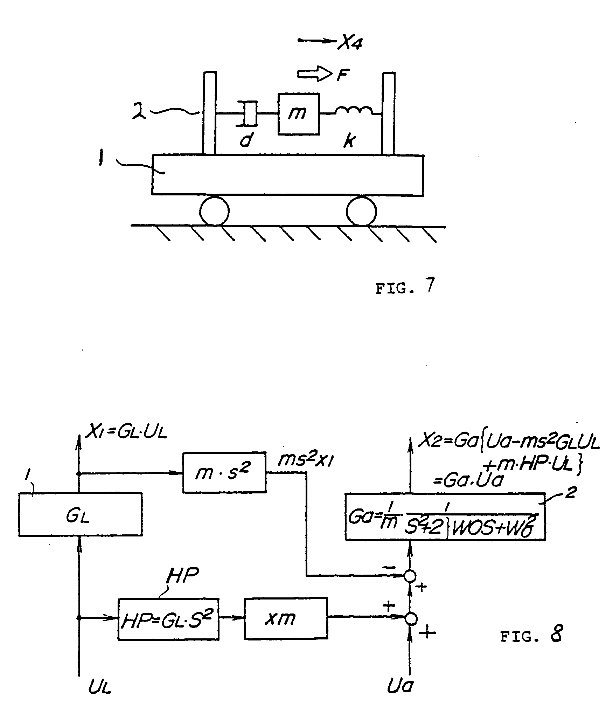

Fig. 6 is a bode diagram of Equation (3) given above. The deviation ratio of the precision actuator 2 attendant to the behaviour of the roughing actuator 1, namely, the physical interference of the roughing actuator 1 with the precision actuator 2 is $|Gd| \geq 1$ at the angular frequency of approximately $\omega \geq \omega$ o. This indicates that the behaviour x of the roughing actuator 1 comes out as the actual physical interference or a multiple thereof.

This sort of physical interference makes normal tandem control difficult, and it can cause great problems in the tandem control system. In the worst cases in which extremely instable phenomena such as inverse motion are experienced the roughing and precision actuators are displaced in opposite directions.

The relationship between the physical interference and the transfer function of the precision actuator is as follows:

In a case where a driving force F is applied to a moving part of the precision actuator 2 of Fig. 7 for displacement x4, without displacement of the roughing actuator 1, the equation of motion is

$$m(d^2x4/dt^2) + d(dx4/dt) + k \cdot x4 = F$$

By Laplace transformation, we obtain

$$(ms^2 + ds + k)x4 = F$$

Consequently, the transfer function of the precision actuator 2 is expressed as

$$Ga = x4/F = 1/(ms^2 + ds + k)$$
$$= (1/m) \cdot \{1/(s^2 + 2\zeta\omega os + \omega o^2)\} \qquad (4)$$

wherein the symbols have the same meanings as in Equation (3).

However, since the displacement x3 of physical interference is expressed as x3 = Gd·x1, from Equation (3) we obtain

$$x3 = -\{s^2/s^2 + 2\zeta\omega os + \omega o^2)\} \cdot x1 \qquad (5)$$

By a comparison of Equations (3) and (4), we obtain

$$Gd = -s^2/(s^2 + 2\zeta\omega os + \omega o^2)$$
$$= -ms^2 \cdot (1/m) \cdot \{1/(s^2 + 2\zeta\omega os + \omega o^2)\}$$
$$= -ms^2 \cdot Ga$$

Therefore,

$$x3 = -ms^2 \cdot Ga \cdot x1 = -m \cdot (s^2 x1)-Ga \qquad (7)$$

That is to say, the displacement x3 due to physical interference is obtained by multiplying the second order differential (i.e. acceleration) of the displacement x1 of the roughing actuator 1 by the mass of the moving part and the transfer function of the precision actuator 1 and taking the reverse polarity of the product.

In order to compensate for the physical interference, the acceleration of the roughing actuator 1, detected by a suitable means, is multiplied by the mass of the moving part of the precision actuator 2 and then applied to the latter. For example, Fig. 8 shows a conventional means which can serve for this purpose, in which the drive signal UL for the roughing actuator 1 is multiplied by a suitable coefficient by passing it through a high-pass filter with characteristics inverse to the roughing actuator 1. It is then added to the drive signal Ua of the precision actuator 2. However, the roughing actuator 1 generally consists of a slide system using slide-fit surfaces or a rolling system using bearings, namely, the so-called non-linear system. The response of such a system is not always the same relative to a given driving signal. Accordingly, a conventional system which is based on the driving signal to the roughing actuator 1 fails to reflect the actual acceleration of the roughing actuator 1, giving rise to a problem of inaccurate compensation for the abovementioned interference.

This problem occurs not only in the ordinary tracking operation of the tandem servo control, but also in the so-called access operation, in which the precision actuator 2 is similarly interfered by the displacement of the roughing actuator. The acceleration of the roughing actuator 1 is particularly high during the access operation, so that the moving part of the precision actuator is displaced by a large amount. This displacement throws the moving part of the precision actuator 2 into vigorous vibration, necessitating a wait time after completion of the access operation to attenuate the vibration before drawing in the servo. This results in an objectionably elongated access time. The conventional system of Fig. 8 is also incapable of appropriately compensating for the physical interference of the vibrational initial displacement.

From EP-A-0,090,379, there is known a disc track searching device in which, during the access (search) operation, the displacement of a precision actuator due to movement of a supporting coarse actuator is compensated by a signal derived from the acceleration of the coarse actuator, in order to reduce the access time by improving the stabilisation of the precision actuator.

It is therefore an aim of the present invention to alleviate the above-mentioned drawbacks or problems in a tandem servo control system of the sort discussed above both during ordinary tracking servo control and also in the so-called access operation thereby to achieve stabilization and high performance quality.

The invention is specified in claim 1.

The present invention will become more fully understood from the detailed description given hereinbelow and the accompanying drawings which are given by way of illustration only, and thus are not limitative of the present invention, and wherein:

Fig. 1 is a layout of an optical data recording/reproducing apparatus incorporating a position control system of one embodiment of the present invention;

Fig. 2 is a layout of an optical data recording/reproducing apparatus incorporating a position control system of another embodiment of the present invention;

Fig. 3 is a diagrammatic illustration employed for the explanation of the tandem servo control by a first actuator serving for rough control in the tracking direction and a second actuator serving for precision control in the tracking direction;

Fig. 4 is a diagrammatic illustration employed for the explanation of the physical interference which is imposed on the second actuator by operation of the first actuator;

Fig. 5 is a diagrammatic illustration of the motions in Fig. 4;

Fig. 6 is a graph showing the physical interference by way of a bode diagram;

Fig. 7 is a diagrammatic illustration employed for the explanation of the operation of the second actuator in a case where a driving force is applied thereto without displacing the first actuator; and

Fig. 8 is a layout of a conventional optical data recording/reproducing apparatus.

Normally it is often the case that the roughing actuator is provided with a speed sensor or a position sensor, which consists of a combination of a coil and a magnet or a light emitting/receiving element and a scale, for the purpose of controlling its speed/position. The actual acceleration of the roughing actuator can be obtained from the signals from these sensors, i.e. by differentiation of first order in case of the signal from the speed sensor and by differentiation of second order in case of the signal from the position sensor. The acceleration signal thus obtained is added to the precision actuator to compensate for the physical interference between the two actuators.

Hereafter, the arrangement of the apparatus according to the invention is described more particularly.

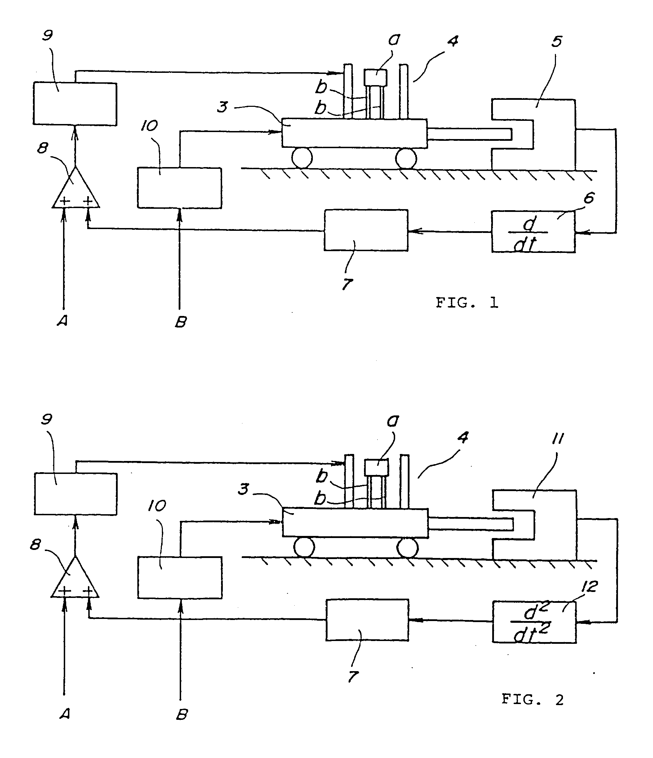

Referring to Fig. 1, a roughing actuator 3 serves for coarse control in the tracking direction. Denoted at 4 is a precision actuator which serves for accurate control in the tracking direction. The reference character a indicates an objective lens for converging a light beam, and b denotes support members for the objective lens a.

A speed sensor 5 detects the relative speed of the roughing actuator 3. The speed detected by the speed sensor 5 is sent to a differentiator 6 where it is converted into an acceleration signal by first order differentiation.

Further, the acceleration signal from the differentiator is fed to a coefficient multiplier 7, which multiplies the mass of the actuator 4 by the acceleration signal.

The output signal of the coefficient multiplier 7 is sent to an adder 8, at which the output signal from the coefficient multiplier 7 is added with a drive signal A from a drive signal generator which is not shown.

Indicated at 9 is a drive circuit for the precision actuator 4 for driving the latter according to the results of addition by the adder 8.

In this particular embodiment, as mentioned hereinbefore, the drive signal A to be sent to the precision actuator 4 is not fed directly to the drive circuit 9. That is to say, a correction is made to the drive signal A according to the signal of acceleration of the coarse actuator 3 to drive the precision actuator 4 in such a manner as to compensate for its displacement due to the physical interference of the movement of the coarse actuator 3.

The reference numeral 10 denotes a drive circuit for the coarse actuator 3, which drives the latter according to a drive signal from a drive signal generator which is not shown.

The drive circuits 9 and 10 for the precision and coarse actuators 4 and 3 may further include a phase compensating circuit or the like if necessary.

Fig. 2 shows another embodiment of the invention, wherein like parts are designated by like reference numerals and characters except for reference numerals 11 and 12 which indicate a position sensor and a differentiator, respectively.

In this embodiment, the position (displacement) of the coarse actuator is detected by the position sensor 11. The position (displacement) detected by the position sensor 11 is converted to an acceleration signal at the differentiator 12 by second order differentiation.

The operation after conversion to an acceleration signal is the same as in the preceding embodiment. In both the foregoing embodiments, the compensation is made during both normal and access operations.

The present invention is applicable to the so-called optical disk systems or other optical data recording/reproducing apparatus.

As is clear from the foregoing description, the optical data recording/reproducing apparatus according to the present invention is arranged to detect the acceleration of the actual motion of a first actuator serving for rough control in the tracking direction and to make a compensation to relieve a second actuator serving for precision control in the tracking direction from the physical interference of the first actuator, thereby stabilizing the operation of a tandem control system by removing the influence of the non-linear characteristics of the first actuator as well as its physical interference.

## Claims

1. A position control system for controlling the position of an optical element (a) in a tracking direction relative to a tracked recording medium in an optical data recording/reproducing apparatus, the system comprising a first, rough control means (3) for coarse positioning of said optical element, and a second, precision control means (4) for precise positioning of said optical element, said first and second control means (3,4) receiving first and second control signals (B, A) respectively; means (5, 6; 11, 12) for providing a compensating signal derived from the acceleration of a moving part coupled to the rough control means; and means (8) responsive to the second control signal (A) and said compensating signal for producing a drive signal for the precision control means (4) so as to compensate for interference with the precise control movement due to the movement caused by the rough control means characterised in that the compensation for interference with the precise control movement due to the movement caused by the rough control means is effected both in normal tracking and in access modes of operation of said apparatus.

2. A position control system according to claim 1, wherein said means for providing a compensation signal includes a speed sensor (5) for producing a signal representative of the speed of said rough control means and a differentiator (6) for differentiating said speed representative signal to produce a signal representative of the acceleration of the rough control means.

3. A position control system according to claim 1, wherein the means for providing a compensation signal includes a position sensor (11) for producing a signal representative of the displacement of the rough control means and a differentiator (12) for converting the signal representative of the displacement into a signal representative of the acceleration of the rough control means by second order differentiation.

4. A position control system according to Claim 1, including first drive means (10) operable in a normal tracking mode and in a data access mode for controlling said rough control means (3) to effect said coarse positioning of the optical element, and second drive means (9) operable in response to said compensating signal for controlling said precision control means (4) to effect said precise positioning of the optical element.

## Patentansprüche

1. Positionssteuersystem zur Steuerung der Position eines optischen Elementes (a) in einer Spurrichtung in bezug auf ein mit Spuren versehenes Aufzeichnungsmedium bei einem optischen Datenaufzeichnungs-/Wiedergabegerät, wobei das System ein erstes, grobes Steuermittel (3) für die grobe Positionierung des optischen Elements und ein zweites, Präzisionssteuermittel (4) zur genauen Positionierung des optischen Elements aufweist, wobei das erste und zweite Steuermittel (3, 4) jeweils erste und zweite Steuersignale (B, A) auf-nehmen; mit einem Mittel (5, 6; 11, 12) zur Lieferung eines Kompensationssignals, das von der Beschleunigung eines sich bewegenden Teils, der an das grobe Steuermittel angekoppelt ist, abgeleitet wird; und mit einem Mittel (8), das auf das zweite Steuersignal (A) und das Kompensationssignal anspricht, um ein Antriebssignal für das Präzisionssteuermittel (4) zu erzeugen, damit eine Störung durch die Präzisionssteuerbewegung kompensiert wird, welche auf eine Bewegung zurückgeht, die von dem groben Steuermittel verursacht ist, **dadurch gekennzeichnet,** daß die Kompensation für die Störung der Präzisionssteuerbewegung, die auf die Bewegung durch das grobe Steuermittel zurückgeht, sowohl bei der normalen Verfolgung, als auch im Zugriffsbetriebszustand der Vorrichtung durchgeführt wird.

2. Positionssteuersystem nach Anspruch 1, wobei das Mittel zur Schaffung eines Kompensationssignals einen Geschwindigkeitssensor (5) zur Erzeugung eines Signals, das der Geschwindigkeit des groben Steuermittels entspricht, und einen Differentiator (6) zum Differenzieren des Geschwindigkeitsdarstellungssignals aufweist, um ein Signal zu erzeugen, das der Beschleunigung des groben Steuermittels entspricht.

3. Positionssteuersystem nach Anspruch 1, wobei das Mittel zur Schaffung eines Kompensationssignals einen ersten Positionssensor (11) zum Erzeugen eines Signals aufweist, das die Verschiebung des groben Steuermittels darstellt, und einen Differentiator (12) besitzt, um das Signal, das die Verschiebung darstellt, in ein Signal für die Darstellung der Beschleunigung des groben Steuermittels durch eine zweite Ableitung umzuwandeln.

**4.** Positionssteuermittel nach Anspruch 1, mit einem ersten Antriebsmittel (10), das im normalen Verfolgungsmodus betriebsfähig ist und in einem Datenzugriffsmodus zum Steuern des groben Steuermittels (3), um die grobe Positionierung des optischen Elements zu bewirken, und mit einem zweiten Antriebsmittel (9), das in Abhängigkeit von dem Kompensationssignal betreibbar ist, um das Präzisionssteuermittel (4) zu steuern und eine genaue Positionierung des optischen Elements zu bewirken.

## Revendications

**1.** Système de réglage de position destiné à régler la position d'un élément optique (a) dans une direction de suivi par rapport à un milieu d'enregistrement suivi dans un appareil d'enregistrement/de reproduction optique de données, le système comprenant un premier moyen de réglage d'approximation (3) en vue d'un positionnement grossier dudit élément optique, et un deuxième moyen de réglage de précision (4) en vue d'un positionnement précis dudit élément optique, lesdits premier et deuxième moyens (3, 4) de réglage recevant un premier et un deuxième signaux de commande (B, A) respectivement; un moyen (5, 6; 11, 12) de production d'un signal compensateur dérivé de l'accélération d'un élément mobile couplé au moyen de réglage d'approximation, et un moyen (8) sensible au deuxième signal (A) de réglage et audit signal compensateur pour produire un signal d'excitation du moyen de réglage (4) de précision de façon à compenser l'interférence avec le mouvement de réglage précis due au mouvement provoqué par le moyen de réglage d'approximation, caractérisé en ce que la compensation de l'interférence avec le mouvement précis de réglage, due au mouvement provoqué par le moyen de réglage d'approximation, est effectuée dans les deux modes de fonctionnement, de suivi normal et d'accès, dudit appareil.

**2.** Système de réglage de position selon la revendication 1, dans lequel ledit moyen de production de signal compensateur inclut un capteur de vitesse (5) pour produire un signal représentatif de la vitesse dudit moyen de réglage d'approximation et un différentiateur (6) pour différencier ledit signal représentatif de vitesse afin de produire un signal représentatif de l'accélération dudit moyen de réglage d'approximation.

**3.** Système de réglage de position selon la revendication 1, dans lequel le moyen de production d'un signal compensateur inclut un capteur de position (11) pour produire un signal représentatif du déplacement du moyen de réglage d'approximation et un différentiateur (12) pour convertir le signal représentatif du déplacement en un signal représentatif de l'accélération du moyen de réglage d'approximation par une différentiation du deuxième ordre.

**4.** Système de réglage de position selon la revendication 1, comprenant un premier moyen d'excitation (10) qui peut être mis en oeuvre dans un mode normal de suivi et dans un mode d'accès de données pour régler ledit moyen (3) de réglage d'approximation afin d'effectuer ledit positionnement grossier de l'élément optique, et un deuxième moyen d'entraînement (9) qui peut être mis en oeuvre en réponse audit signal compensateur pour régler ledit moyen (4) de réglage de précision afin d'effectuer ledit positionnement précis de l'élément optique.

FIG. 1

FIG. 2

FIG. 3

FIG. 4

FIG. 5

FIG. 6

FIG. 7

FIG. 8